# FASCICULE DE BREVET EUROPEEN

(11) **EP 2 056 023 B1**
(45) Date de publication et mention de la délivrance du brevet: **22.04.2015**
(21) Numéro de dépôt: 08168101.7
(22) Date de dépôt: 31.10.2008
(51) Int. Cl.: F23R 3/50, F02C 7/20, F02C 9/26

(54) **Chambre de combustion annulaire de moteur à turbine à gaz**
Ringförmige Brennkammer eines Gasturbinenmotors
Annular combustion chamber for a gas turbine engine

(30) Priorité: 31.10.2007 FR 0707687
(43) Date de publication de la demande: 06.05.2009
(73) Titulaire: SNECMA, 75015 Paris (FR)
(72) Inventeur: Pieussergues, Christophe, 77370 Nangis (FR); Sandelis, Denis, Jean, Maurice, 77370 Nangis (FR)
(74) Mandataire: Gevers France

(56) Documents cités:
- EP-A- 1 209 338
- FR-A- 2 540 186
- FR-A- 2 686 943
- FR-A- 2 880 391
- US-A- 5 544 478

## Description

La présente invention concerne le domaine des moteurs à turbine à gaz et vise plus particulièrement le fonctionnement des chambres de combustions de manière à améliorer notamment le profil de température en sortie de chambre de combustion.

Un moteur à turbine à gaz tel qu'un moteur assurant la production de gaz de propulsion d'un aéronef comprend un moyen de compression d'air qui alimente une chambre de combustion dans laquelle l'air est mélangé à un carburant et brûlé. Les gaz produits dans la chambre de combustion sont guidés à travers des roues de turbine où ils sont détendus puis évacués. Les turbines entraînent les différentes roues de compresseur dont la soufflante dans un turboréacteur. Dans un aéronef, des prélèvements de puissance et d'air comprimé sont effectués pour assurer une pluralité de fonctions auxiliaires. En particulier on prélève de l'air dans l'espace situé immédiatement en aval du diffuseur d'air comprimé débouchant dans la chambre de combustion.

L'air est extrait par des bouches de prélèvement réparties sur le carter de la chambre de combustion en plusieurs endroits dans cet espace annulaire.

Une telle chambre de combustion est montrée dans FR 2 686 943 A1.

On assigne maintenant au moteur la fonction de fournir de l'air à l'aéronef sur une large gamme de fonctionnement pouvant aller jusqu'au plein gaz. Ce prélèvement a un effet sur la qualité de la combustion.

On constate ainsi en aval de la chambre l'apparition de points chauds. L'analyse du problème a montré que ces zones de températures élevées se situaient en aval dans le sillage des bouches de prélèvement. Le phénomène est lié à la répartition des injecteurs de carburant tout autour de l'axe. En effet la combustion dans la chambre annulaire se décompose en une pluralité de foyers de combustion situés dans le prolongement des injecteurs de carburant. Le carburant est injecté en amont de la chambre par les injecteurs à travers des ouvertures du fond de chambre et la combustion résulte du mélange de l'air passant par ces ouvertures avec le carburant. On a constaté que les prélèvements d'air par les bouches de prélèvement, dans la mesure où ils sont nécessairement localisés, avaient un effet sur la qualité de la combustion dans les foyers situés en aval dans l'environnement immédiat de ces bouches de prélèvement. L'air extrait à travers ces bouches de prélèvement manque au foyer de combustion situé dans la même zone. Il s'ensuit une sur-richesse en carburant dans ces zones qui conduit à une augmentation de la température des gaz de combustion, d'où un profil de température non homogène constaté en aval de la chambre.

La demanderesse s'est fixé comme objectif d'améliorer le profil de température du gaz en sortie de chambre de combustion et de réduire les points chauds qui sont dommageables à la tenue des pièces dans cette zone, des distributeurs haute pression en particulier.

Conformément à l'invention on parvient à cet objectif avec une chambre de combustion annulaire de moteur à turbine à gaz comprenant un carter avec au moins une bouche de prélèvement d'air située en entrée de chambre, un dispositif d'alimentation en carburant avec une pluralité d'injecteurs de carburant dans la chambre répartis annulairement au moins un injecteur étant situé à proximité de ladite bouche de prélèvement, caractérisée par le fait que le dispositif d'alimentation en carburant comprend un moyen pour réduire le débit du carburant dans ledit injecteur situé à proximité de la bouche de prélèvement, par rapport aux autres injecteurs de carburant.

Les avantages de la solution de l'invention sont de parvenir avec un moyen simple à mettre en oeuvre une homogénéisation de la richesse en carburant sur toute la chambre de combustion. Il s'ensuit une limitation des sillages constatés et une amélioration de la carte de température au régime plein gaz. La conséquence en est une amélioration de la durée de vie des distributeurs à haute pression immédiatement en aval de la chambre de combustion.

Conformément à une autre caractéristique, le moyen de réduction du débit de carburant est agencé pour réduire le débit de carburant dans l'injecteur situé à proximité de la bouche de prélèvement d'air, de 3 à 10% par rapport aux autres injecteurs.

Selon un mode de réalisation ledit moyen de réduction de débit est un diaphragme dans le conduit d'alimentation de l'injecteur.

Selon un autre mode de réalisation, les injecteurs de carburant comprennent une alimentation de ralenti et une alimentation plein gaz avec un moyen de commande du débit dans l'alimentation plein gaz, le moyen réducteur de débit étant agencé pour agir sur ledit moyen de commande.

Plus particulièrement, le moyen de commande est un clapet rappelé par un ressort, le moyen réducteur de débit étant formé d'un ressort de raideur déterminée.

Selon un autre mode de réalisation, le dispositif d'alimentation comprend un collecteur auquel sont reliés les conduits d'alimentation individuels des injecteurs, le conduit d'alimentation de l'injecteur à proximité de la bouche de prélèvement étant commandé par une vanne dont la position est déterminée de façon à réduire le débit par rapport aux autres injecteurs.

D'autres caractéristiques et avantages ressortiront à la lecture de la description qui suit de modes de réalisation non limitatifs de l'invention en référence aux dessins sur lesquels,
La figure 1 représente une chambre de combustion de moteur à turbine à gaz vu en demi coupe axiale ;
La figure 2 représente une chambre de combustion annulaire vue depuis l'entrée d'air en direction de l'aval par rapport à l'écoulement des gaz ;
La figure 3 représente un injecteur de type aéromécanique avec deux conduits parallèles d'alimentation en carburant,
La figure 4 représente un injecteur avec un seul conduit d'alimentation en carburant,
La figure 5 montre une variante de réalisation de l'invention.

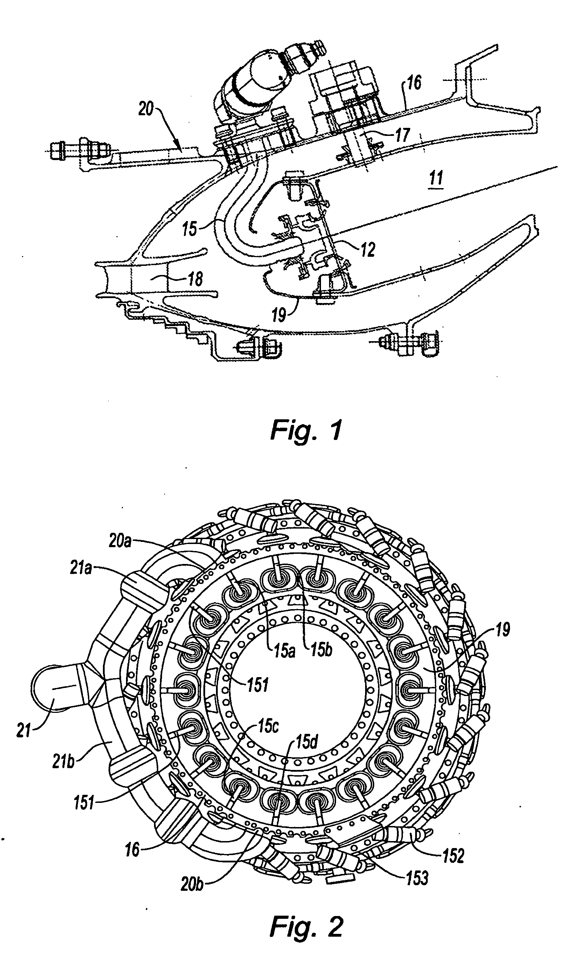

La figure 1 représente partiellement en demi-coupe, une chambre de combustion 11 d'un turboréacteur d'avion 10. La chambre de combustion à géométrie globalement annulaire comporte un fond de chambre 12 pourvu d'orifices à l'intérieur desquels sont engagées les têtes de pulvérisation 14 d'un certain nombre d'injecteurs 15 portés par un carter 16 entourant la chambre de combustion. Les injecteurs 15 sont espacés régulièrement circonférentiellement. L'air comprimé, provenant du compresseur haute pression situé en amont, non visible, est introduit dans le carter par un diffuseur annulaire 18. L'air chaud est partagé en deux flux par des tôles 19 de guidage recouvrant le fond de chambre 12 ; un flux traverse le carter 16 en contournant la chambre de combustion 11 avant d'y être introduit dans sa partie aval et l'autre s'engage dans la chambre de combustion par des ouvertures entre les tôles de guidage et les orifices du fond de chambre 12, pour se mélanger au carburant projeté par les têtes de pulvérisation 14 dans la chambre de combustion. Le carburant s'enflamme au contact d'une bougie d'allumage 17 située dans l'angle du cône de pulvérisation de carburant pour fournir des gaz alimentant une turbine haute pression située en aval et non représentée. Chaque injecteur 15 comporte un bras d'injecteur, supportant et alimentant la tête de pulvérisation 14. Le bras est coudé à façon à maintenir la tête de pulvérisation en position perpendiculaire au fond de chambre. Dans le cadre de la chambre de combustion à laquelle s'applique l'invention des bouches 20 de prélèvement d'air sont ménagées dans le carter 16. Les bouches de prélèvement d'air communiquent avec la zone annulaire située entre le diffuseur 18 et les tôles 19 de guidage

En référence à la figure 2, on voit la chambre de combustion dans l'axe du moteur depuis l'amont vers l'aval par rapport au sens de l'écoulement des gaz. Les injecteurs 15 sont répartis régulièrement autour de la chambre. Ils sont formés ici de tubes 151 reliés par des régulateurs de débits 152 individuels à une conduite annulaire 153 distribuant le carburant dans les différents tubes 152 d'alimentation des injecteurs. Les injecteurs sont engagés dans des ouvertures individuelles à travers les tôles 19 pour alimenter l'intérieur de la chambre de combustion. Sur cette figure, on a représenté le tube de prélèvement 21 comprenant deux portions de tubes 21a et 21b qui sont reliés chacune à une bouche de prélèvement 20a respectivement 20b, toutes deux ménagées sur le carter de la chambre de combustion. Les deux portions de tube se rejoignent en un tube 21 qui guide l'air extrait vers les différentes zones d'utilisation.

On voit bien sur cette figure que les deux bouches 20a et 20b sont disposées immédiatement en amont d'une partie des injecteurs. Il s'agit ici des injecteurs 15a et 15b d'une part et des injecteurs 15c et 15d d'autre part. L'air provenant du diffuseur 18 forme un flux annulaire qui se subdivise en flux élémentaires qui pénètrent dans chacune des ouvertures 19a du carénage 19 en entrée de la chambre 11 et auxquelles sont associés les injecteurs 15. En fonctionnement le carburant fourni par chacun des injecteurs se mélange aux flux élémentaires pour former autant de foyers de combustion répartis annulairement.

Dans la mesure où les injecteurs sont tous alimentés de la même façon à partir du circuit d'alimentation général. La qualité de la combustion dans chacun des foyers dépend du rapport des débits de carburant sur les débits d'air élémentaires. En particulier, le prélèvement d'air par les bouches d'extraction 20a et 20b entraîne une modification du rapport air sur carburant en aval des injecteurs 15a, 15b et 15c, 15d. La richesse excessive en carburant qui en résulte se traduit dans les foyers de combustion associés à ces injecteurs par une température des gaz de combustion plus élevée que dans les autres foyers. Il s'ensuit un profil de température annulaire en aval de la chambre de combustion qui présente des points plus chauds.

Conformément à l'invention on résout ce problème en réduisant l'alimentation en carburant dans les injecteurs ci-dessus de manière à revenir à un rapport air sur carburant égal à celui des autres foyers.

Les moyens pour y parvenir sont adaptés aux moyens d'injection.

De façon connue, les injecteurs alimentent en carburant la chambre de combustion lors du démarrage et du fonctionnement normal du moteur. Principalement, il existe deux types d'injecteurs : les injecteurs dits «aéromécaniques » conçus pour deux circuits de carburant (primaire et secondaire) suivant les phases de fonctionnement du moteur (allumage, de faible à pleine puissance), et les injecteurs dits « aérodynamiques » qui ne comportent qu'un seul circuit de carburant pour toutes les phases de fonctionnement.

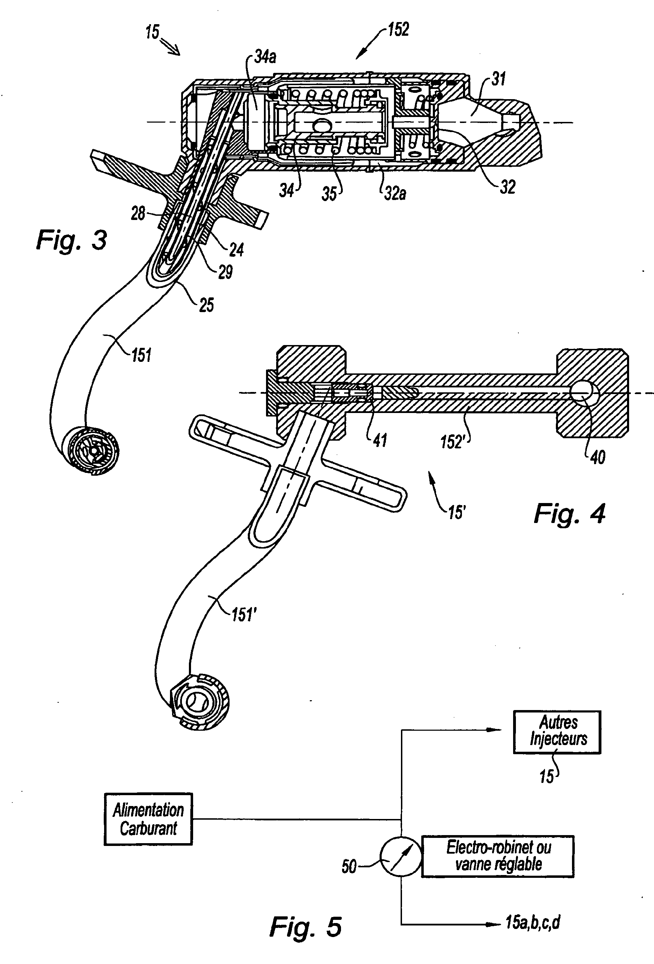

Dans le cas d'un dispositif aéromécanique, à double jet, l'injecteur comporte un bras fixé au carter de la chambre de combustion et terminé par une tête de pulvérisation. Un exemple de dispositif d'injection aéromécanique est représenté sur la figure 3. Chaque bras 151comporte deux tubes par exemple comme dans le dispositif décrit dans le brevet EP1770333, au nom de la demanderesse, un premier tube, extérieur, 24 entouré d'une enveloppe protectrice 25 et un second tube, intérieur, 26 engagé co-axialement dans le tube extérieur de façon à définir deux conduits coaxiaux, un conduit central 28 délimité par ledit tube intérieur et un conduit périphérique 29 à section annulaire entourant le conduit central et délimité par les deux tubes 24, 26 intérieur et extérieur. Chaque bras d'injecteur 151 est relié à deux circuits d'alimentation de carburant permettant d'adapter les conditions d'alimentation aux différents régimes du moteur. On distingue un circuit primaire de carburant pour le fonctionnement au ralenti et à faible puissance dont le débit est faible et permanent, quelles que soient les conditions de fonctionnement du moteur et un circuit de carburant secondaire à débit essentiellement variable de faible voire nul à maximum.

Les deux conduits de carburant 28 et 29 sont ainsi reliés par exemple à un dispositif de dosage 152 du type décrit dans le brevet FR 2540186 ou encore EP 1209338.

Le carburant est fourni sous pression par une pompe au dispositif 152 par un raccord 31 d'admission de carburant. Ce raccord communique avec une soupape d'arrêt 32 qui s'ouvre lorsque la pression du carburant dépasse un premier seuil et qui reste ouverte pendant le fonctionnement du moteur. En aval de la soupape d'arrêt le carburant est guidé en permanence par le passage 32a, vers le premier conduit 28 jusqu'à la tête de pulvérisation. Une autre partie du carburant, formant l'écoulement secondaire, est commandée par une soupape de dosage. L'écoulement secondaire est ainsi contrôlé par la soupape de dosage 34 en aval de la soupape d'arrêt 32 et conçue pour s'ouvrir et doser le carburant à partir d'une pression supérieure au premier seuil. Le carburant est guidé en aval de la soupape 34 par le passage 34a jusqu'au conduit 29 d'où il est dirigé vers la tête de pulvérisation. La soupape 34 s'ouvre sous l'effet de la pression du carburant contre la force de rappel du ressort 35.

Dans les solutions de l'art antérieur, on vise à régler la soupape de dosage du carburant secondaire de telle façon que les débits de carburant soient aussi proches que possible dans tous les injecteurs de la même chambre de combustion. Conformément à l'invention, on modifie le réglage des soupapes de dosage associées aux injecteurs 15a à 15d de telle façon que leur débit soit plus faible d'une valeur déterminée, notamment entre 3% et 10% par rapport à celui des autres injecteurs de la chambre de combustion. En diminuant le débit, on réduit la richesse du mélange carburé dans les foyers de combustion situés dans l'environnement des bouches d'extraction d'air.

Le moyen de réglage des soupapes de dosage 34 consiste en un réglage des ressorts 35 qui leur sont associés.

Un injecteur de type aérodynamique 15' comme cela est représenté dans la figure 4 est alimenté notamment à travers une soupape de dosage agencée pour s'ouvrir sous une pression d'alimentation du combustible prédéterminée et rester ouverte en réponse à une augmentation de cette pression d'alimentation afin de permettre l'admission du combustible puis son éjection vers le nez d'injecteur au niveau duquel le combustible est diffusé dans la chambre de combustion.

Dans le canal 152' d'alimentation des bras d'injection 151', un diaphragme fixe assure le calibrage du débit. Ces diaphragmes dans les réalisations conventionnelles sont identiques de manière à assurer un même débit aux différents injecteurs. Un tel diaphragme est représenté sur la figure 4. Le bras injecteur 15' monotube est relié au circuit d'alimentation en carburant dosé par un raccord 40 qui comporte un diaphragme 41 à section calibrante. Conformément à l'invention on choisi un diaphragme de section calibrante appropriée de telle façon que le débit par les injecteurs 15'a à 15'd correspondant en position aux injecteurs 15a à 15d de la figure 2, soit inférieur à celui des autres injecteurs.

Selon une variante de réalisation de l'invention, les injecteurs de carburant 15a à 15d ou 15'a à 15'd sont alimentés par des circuits distincts de ceux des autres injecteurs qui sont commandés par un électro-robinet ou bien une vanne réglable.

Comme on le voit sur la figure 5, le circuit de carburant alimentant les injecteurs 15a à 15d est commandé par un électro robinet ou une vanne 50. L'électro robinet prend deux positions possibles : une position ouverte et une position à passage réduit de manière à créer une perte de charge dans le circuit correspondant. Lorsqu'il n'y a pas de prélèvement d'air par les bouches de prélèvement, l'électro robinet est ouvert. L'ensemble des injecteurs fonctionne de la même façon. Lorsque le prélèvement est en fonction, l'électrovanne est en position pour créer une perte de charge dans le circuit d'alimentation des injecteurs 15a à 15d. Par cette perte de charge le débit aux injecteurs considérés est réduit.

Si la loi de régulation du fonctionnement du prélèvement est plus complexe une vanne réglable est montée et régulée en fonction du débit du prélèvement d'air pour optimiser l'homogénéité en richesse des injecteurs dans tout le domaine du vol.

Les exemples présentés ne sont pas limitatifs d'autres variantes de réalisation sont possibles. Ainsi l'invention ne se limite pas au prélèvement par deux bouches sur le carter ; d'autres agencements sont possibles.

## Revendications

1. Chambre de combustion annulaire de moteur à turbine à gaz comprenant un carter (16) avec au moins une bouche (20) de prélèvement d'air située en entrée de chambre (11), un dispositif d'alimentation en carburant avec une pluralité d'injecteurs (15) de carburant dans la chambre répartis annulairement dont au moins un (15a à 15d) est situé à proximité de ladite bouche de prélèvement, **caractérisée par le fait que** le dispositif d'alimentation en carburant comprend un moyen pour réduire le débit du carburant dans ledit injecteur (15a à 15d) situé à proximité de la bouche (20a, 20b) de prélèvement par rapport aux autres injecteurs de carburant (15).

2. Chambre de combustion selon la revendication précédente dont le dit moyen de réduction du débit de carburant est agencé pour réduire le débit de carburant dans ledit injecteur (15a à 15d) situé à proximité de la bouche de prélèvement d'air de 3 à 10% par rapport aux autres injecteurs (15).

3. Chambre de combustion selon l'une des revendications précédentes dont ledit moyen de réduction de débit est un diaphragme fixe (41) dans le conduit d'alimentation de l'injecteur (15'a à 15'd).

4. Chambre de combustion selon l'une des revendications 1 à 3 dont les injecteurs (15) de carburant comprennent une alimentation de ralenti et une alimentation plein gaz avec un moyen (34) de commande du débit dans l'alimentation plein gaz, le moyen réducteur de débit étant agencé pour agir sur ledit moyen de commande.

5. Chambre de combustion selon la revendication précédente dont le moyen de commande est une soupape (34) rappelée par un ressort (35), le moyen réducteur de débit étant formé d'un ressort de raideur déterminée.

6. Chambre de combustion selon l'une des revendications 1 à 3 dont le dispositif d'alimentation comprend un collecteur auquel sont reliés les conduits d'alimentation individuels des injecteurs, le conduit d'alimentation dudit injecteur à proximité de la bouche de prélèvement étant commandé par une vanne (50) dont la position est déterminée de façon à réduire le débit par rapport aux autres injecteurs.

7. Chambre de combustion selon la revendication précédente dont la vanne est un électro-robinet.

8. Chambre de combustion selon la revendication 6 dont la vanne est régulée en fonction du débit du prélèvement d'air

9. moteur à turbine à gaz comportant une chambre de combustion selon l'une des revendications 1 à 8.

## Patentansprüche

1. Ringförmige Brennkammer einer Gasturbinenmaschine, die ein Gehäuse (16) mit mindestens einer Luftentnahmeöffnung (20), die am Kammereingang (11) liegt, eine Kraftstoffzuführvorrichtung mit einer Mehrzahl von Kraftstoffinjektoren (15) in die Kammer, die ringförmig angeordnet sind, aufweist, von denen mindestens einer (15a bis 15d) in der Nähe der Entnahmeöffnung liegt, **dadurch gekennzeichnet, dass** die Kraftstoffzuführvorrichtung ein Mittel zum Verringern des Kraftstoffdurchsatzes in dem Injektor (15a bis 15d) aufweist, das in Bezug auf die anderen Kraftstoffinjektoren (15) in der Nähe der Entnahmeöffnung (20a, 20b) liegt.

2. Brennkammer nach dem vorhergehenden Anspruch, deren Mittel zum Verringern des Kraftstoffdurchsatzes eingerichtet ist, um den Kraftstoffdurchsatz in dem Injektor (15a bis 15d), der in der Nähe der Luftentnahmeöffnung liegt, in Bezug auf die anderen Injektoren (15) um 3 bis 10 % zu verringern.

3. Brennkammer nach einem der vorhergehenden Ansprüche, deren Durchsatzverringerungsmittel eine stationäre Membran (41) in der Zuführleitung des Injektors (15'a bis 15'd) ist.

4. Brennkammer nach einem der Ansprüche 1 bis 3, deren Kraftstoffinjektoren (15) eine Leerlaufzufuhr und eine Vollgaszufuhr mit einem Mittel (34) zum Steuern des Durchsatzes in der Vollgaszufuhr aufweisen, wobei das Durchsatzverringerungsmittel eingerichtet ist, um auf das Steuermittel einzuwirken.

5. Brennkammer nach dem vorhergehenden Anspruch, deren Steuermittel ein Ventil (34) ist, das von einer Feder (35) zurückgestellt wird, wobei das Durchsatzverringerungsmittel aus einer Feder mit einer festgelegten Steifigkeit besteht.

6. Brennkammer nach einem der Ansprüche 1 bis 3, deren Zuführvorrichtung einen Sammler aufweist, mit dem die einzelnen Zuführleitungen der Injektoren verbunden sind, wobei die Zuführleitung des Injektors in der Nähe der Entnahmeöffnung durch einen Schieber (50) gesteuert ist, dessen Position derart bestimmt wird, dass der Durchsatz in Bezug auf die anderen Injektoren verringert wird.

7. Brennkammer nach dem vorhergehenden Anspruch, dessen Schieber ein elektrischer Hahn ist.

8. Brennkammer nach Anspruch 6, dessen Schieber in Abhängigkeit von dem Durchsatz der Luftentnahme geregelt ist.

9. Gasturbinenmaschine, die eine Brennkammer nach einem der Ansprüche 1 bis 8 umfasst.

## Claims

1. An annular combustion chamber of a gas turbine engine comprising a casing (16) with at least one air tapping outlet (20) situated at the chamber inlet (11), a fuel supply device with a plurality of fuel injectors (15) in the chamber distributed annularly of which at least one (15a to 15d) is situated close to said tapping outlet, wherein the fuel supply device comprises a means for reducing the fuel flow rate in said injector (15a to 15d) situated close to the tapping outlet (20a, 20b) relative to the other fuel injectors (15).

2. The combustion chamber as claimed in the preceding claim, wherein said means for reducing the fuel flow rate is arranged in order to reduce the fuel flow rate in said injector (15a to 15d) situated close to the air tapping outlet by 3 to 10% relative to the other injectors (15).

3. The combustion chamber as claimed in one of the preceding claims, wherein said flow rate reduction means is a fixed diaphragm (41) in the supply duct of the injector (15'a to 15'd).

4. The combustion chamber as claimed in one of claims 1 to 3, wherein the fuel injectors (15) comprise an idle supply and a full throttle supply with a means (34) for controlling the flow rate in the full throttle supply, the flow rate reducing means being arranged to act on said control means.

5. The combustion chamber as claimed in the preceding claim, wherein the control means is a valve (34) returned by a spring (35), the flow rate reducing means being formed by a spring of determined stiffness.

6. The combustion chamber as claimed in one of claims 1 to 3, wherein the supply device comprises a manifold to which the individual supply ducts of the injectors are connected, the supply duct of said injector close to the tapping outlet being controlled by a gate (50) whose position is determined so as to reduce the flow rate relative to the other injectors.

7. The combustion chamber as claimed in the preceding claim, wherein the gate is a solenoid valve.

8. The combustion chamber as claimed in claim 6, wherein the gate is regulated according to the air tapping flow rate.

9. A gas turbine engine comprising a combustion chamber as claimed in one of claims 1 to 8.
